# EUROPEAN PATENT SPECIFICATION

(11) **EP 2 293 557 B1**
(45) Date of publication and mention of the grant of the patent: **13.04.2016**
(21) Application number: 09769850.0
(22) Date of filing: 04.06.2009
(51) Int. Cl.: H04N 7/088

(54) **TELETEXT DECODING DEVICE**
TELETEXT-DECODIERUNGSEINRICHTUNG
DISPOSITIF DE DÉCODAGE DE TÉLÉTEXTE

(30) Priority: 26.06.2008 JP 2008166988
(43) Date of publication of application: 09.03.2011
(73) Proprietor: Socionext Inc., Kohoku-ku Yokohama-shi Kanagawa 222-0033 (JP)
(72) Inventor: SHIMAZUI, Atsushi, Chuo-ku, Osaka-shi, Osaka 540-6207 (JP)
(74) Representative: Gill Jennings & Every LLP
(86) International application number: PCT/JP2009/002515
(87) International publication number: WO 2009/157140

(56) References cited:
- JP-A- 7 184 172
- JP-A- 9 186 977
- JP-A- H10 322 668
- JP-A- 2000 050 219
- JP-A- 2007 243 826
- JP-B2- 2 703 330

## Description

### FIELD OF THE INVENTION

The present invention relates to a television image receiver more particularly to a technology for initializing a teletext decoding device when an external signal input is switched.

### BACKGROUND OF THE INVENTION

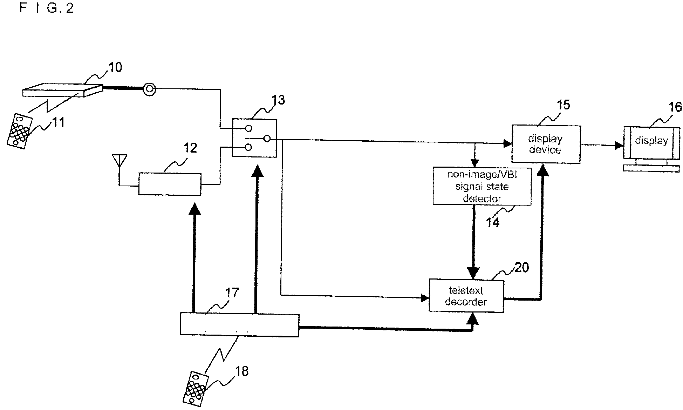

A teletext signal is a text signal used in teletext broadcasting of, for example, Asian and European countries, where the PAL television signal system is adopted, and the technical specification for the teletext signal is defined in ETSI EN300706. The teletext signal is superimposed on an image signal and then transmitted. As illustrated in Fig. 2, after the image signal including the teletext signal is received by a tuner 12, the teletext signal is extracted from the image signal by a teletext decoder 20. The extracted teletext signal is transmitted to a display device 15 to be displayed on a display 16 as teletext data. The teletext data is created by a broadcast station from a screen containing 40 characters × 25 lines as one page and superimposed on the teletext signal, and then transmitted from the broadcast station along with the image signal.

When the teletext signals transmitted from a plurality of broadcast stations are input to the teletext decoder 20, the same page information from different broadcast stations exist in the teletext decoder 20. In such a case, it may become difficult to create the screens which were intended by the respective broadcast stations. As a result, a user who uses the television image receiver is unable to correctly understand the teletext data.

Conventional television image receiver avoided such a disadvantage by preventing the reception channel from being changed during the time that the teletext is displayed, or by providing instructions from a channel changer 17 to the teletext decoder 20 to initialize the teletext data stored therein when the reception channel is changed so that the data in the teletext decoder 20 is discarded.

### SUMMARY OF THE INVENTION

### PROBLEM TO BE SOLVED BY THE INVENTION

These measures can solve the problem when the tuner 12 receives the teletext signal, but they are not effective when an external image signal is inputted to the television image receiver. The television image receiver may be connected with external image output equipment 10 (for example, a set top box) apart from a built-in tuner. Under the condition that the external image output equipment 10 is connected to the television image receiver, even if the external image output equipment 10 changes the reception channel via an attached remote controller 11, the channel change cannot be recognized as a channel change process in the process by the television image receiver. The television image receiver thus fail to instruct the teletext decoder 20 to discard the data stored therein, and the teletext signals transmitted from the plurality of broadcast stations are supplied to the teletext decoder 20.

These problems as set forth above have conventionally been solved as follows. As shown in Fig. 2, an non-image/VBI signal state detector 14 is provided to detect a non-image signal state which occurs when the channel is changed in the external image output equipment 10, so that the teletext data in the teletext decoder 20 is discarded based on the detected result. Thus, the aforementioned technical problem was solved.

However, even by the measures as described above, the aforementioned problems remain unsolved in the case where the duration of the non-image signal state is too short. Even though the non-image signal state is detected by the non-image/VBI signal state detector 14, the teletext decoder 20 fails to discard the data stored therein in time since the non-image signal state is short. As a consequence of the failure, the signals of the plurality of broadcast stations are supplied to the teletext decoder 20.

### MEANS FOR SOLVING THE PROBLEM

The present in vention provides a teletext decoding device for detecting a teletext signal in an image signal to convert the detected teletext signal into a teletext display signal, comprising:
a station name detector for detecting a broadcast station name of a broadcast station which transmits the image signal in the teletext signal; and
a comparator for comparing a latest broadcast station name most recently detected in the teletext signal to a previous broadcast station name detected earlier in the teletext signal to issue an instruction to initialize the teletext display signal when it is known from a comparison result that the two broadcast station names are different to each other.

### EFFECT OF THE INVENTION

The present invention thus detects broadcast station names and then discards (initializes) the teletext display signal in the teletext decoding device. The present invention thus technically characterized solves the conventional problem that image signals transmitted from a plurality of broadcast stations are inputted to a teletext decoding device in the case where the duration of a non-signal state is too short.

### BRIEF DESCRIPTION OF THE DRAWINGS

Fig. 1 is a block diagram illustrating a structure according to an exemplary embodiment of the present invention.
Fig. 2 is a block diagram illustrating a conventional structure.
Fig. 3 is a format illustration of a packet 8/30 format 1.
Fig. 4 is a format illustration of a packet 8/30 format 2.
Fig. 5 is a format illustration of a packet 0.
Fig. 6A is a flow chart illustrating processing steps for detecting broadcast station names.
Fig. 6B is a flow chart illustrating processing steps for comparing broadcast station names.
Fig. 6C is a flow chart illustrating detailed processing steps for discarding a teletext display signal.
Fig. 7 is a flow chart illustrating detailed processing steps for detecting broadcast station name data.

### BEST MODE FOR CARRYING OUT THE INVENTION

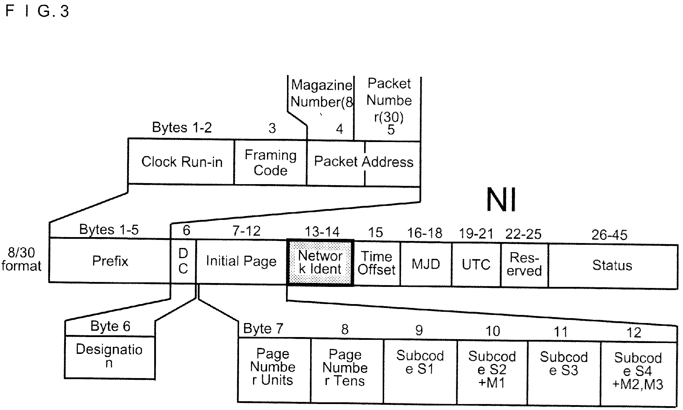

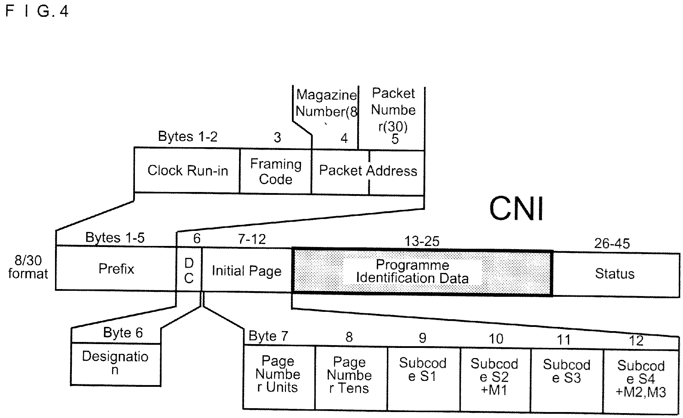

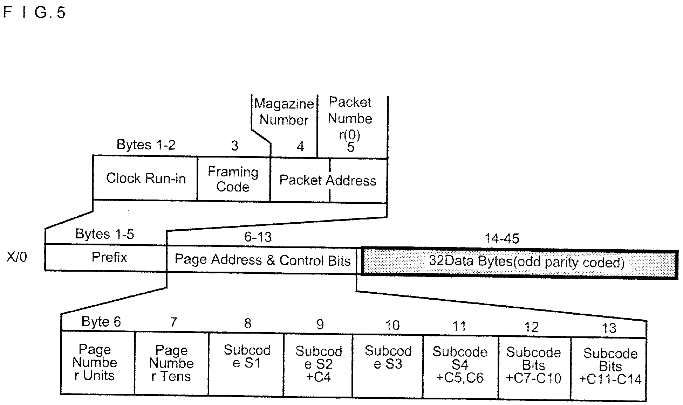

Before an exemplary embodiment of the present invention is described, the key technical feature of the present invention is described. In the PAL television signal system, there are signals transmitted to recording equipment to notify any delay of a program to be broadcasted, and these signals include data which identifies the name of the broadcast station which transmitted an image signal. The data of the broadcast station names is contained in teletext data and VPS (Video Program System) data. A packet 8/30 format 1 illustrated in Fig. 3 stores therein a broadcast station code called NI. A packet 8/30 format 2 illustrated in Fig. 4 stores therein a broadcast station code called CNI. The CNI is also stored in the VPS data. A header portion of a packet 0 illustrated in Fig. 5 displays a broadcast station name. These signals are used to detect the broadcast station name of the image signal in an automatic channel setting when the television image receiver is tuned.

When the channel is changed by external image input equipment (for example, a set top box) connected to an external input terminal, the data for the broadcast station name is included in the image signal change. The present invention utilizes the system for detecting the broadcast station name which uses the packet 8/30 formats 1 and 2, VPS data, or packet 0, thereby periodically detecting the broadcast station name of the image signal externally inputted. In the case where the broadcast station name currently detected is different from the broadcast station name detected at an earlier predetermined time, it is determined that the channel has been changed in the external image input equipment and a teletext display signal in the teletext decoding device is discarded.

Hereinafter, an exemplary embodiment of the present invention is described.

### EXEMPLARY EMBODIMENT

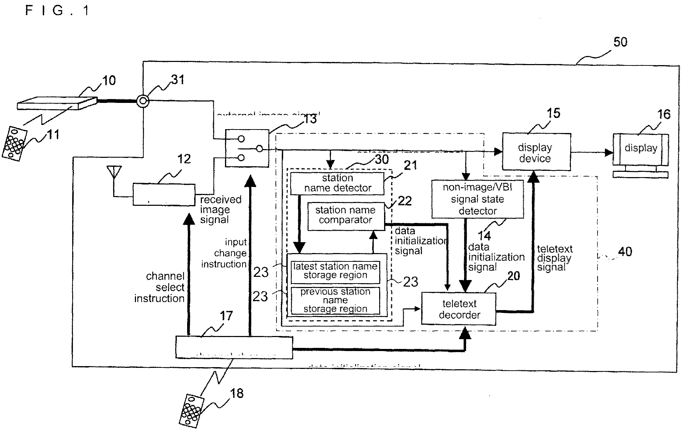

Fig. 1 is a block diagram schematically illustrating a structure of an apparatus 50 embedded with a teletext decoding device according to an exemplary embodiment of the present invention. The apparatus 50 includes, for example, a television image receiver. The apparatus 50 according to the present exemplary embodiment is called a television image receiver in a description given below. The television image receiver 50 is equipped with, in addition to the structural elements illustrated in the conventional example (Fig. 2), a station name detector 21, a station name comparator 22, and a station name storing memory 23. These structural elements are provided in a teletext signal input processor 30. Hereinafter, the television image receiver 50 is described in more detail.

The television image receiver 50 includes a tuner 12, a channel changer 17, an input changer 13, a teletext signal input processor 30, a teletext decoder 20, a display device 15, a display 16, an non-image/VBI signal state detector 14, and an AV input terminal 31. The teletext signal input processor 30, the teletext decoder 20, and the non-image/VBI signal state detector 14 constitute a teletext decoding device 40. An integrated circuit, for example, constitutes the teletext decoding device 40. The integrated circuit is equipped with a RAM. The teletext decoding device 40 is realized by utilizing the RAM included the integrated circuit or an external RAM connected to the integrated circuit. A reference numeral 10 illustrated in the drawings denotes external image output equipment. A reference numeral 11 denotes a wireless remote controller which controls the external image output equipment 10 from outside, and a reference numeral 18 denotes a wireless remote controller which controls the channel changer 17 from outside. The external image output equipment 10 is connected to the AV input terminal 31. A device which outputs an image signal, such as a CATV receiver or a set top box, constitutes the external image output equipment 10. An external image signal outputted by the external image output equipment 10 includes a teletext signal. The image signal outputted from the external image output equipment 10 is inputted to the AV input terminal 31. The AV input terminal 31 outputs the received image signal to the input changer 13.

The channel changer 17 outputs an instruction to select a reception channel (hereinafter, called a channel select instruction) to the tuner 12. The channel changer 17 further outputs an instruction to switch the selected one of the image signal outputted from the tuner 12 and the image signal outputted from the external image output equipment 10 (hereinafter, called an input select instruction) to the input changer 13. When the channel select instruction and the input select instruction are outputted, the channel changer 17 outputs a data initialization signal as well as these instructions to the teletext decoder 20.

The tuner 12 receives the image signal of the broadcast channel selected based on the channel select instruction transmitted from the channel changer 17. The image signal received by the tuner 12 includes the teletext signal. The tuner 12 outputs the received image signal to the input changer 13. Hereinafter, the image signal received by the tuner 12 is called a received image signal (first image signal), and the image signal outputted from the external image output equipment 10 is called an external image signal (second image signal).

The input changer 13 switches the selected one of the received image signal and the external image signal based on the input select instruction outputted from the channel changer 17, and outputs the selected image signal to the teletext decoder 20, teletext signal input processor 30, non-image/VBI signal state detector 14, and display device 15. Hereinafter, the image signal outputted by the input changer 13 is called a selected image signal.

The teletext decoder 20 detects and analyzes the teletext signal superimposed on the selected image signal to generate a teletext display signal, and outputs the generated teletext display signal to the display device 15. The display device generates a display signal based on the received selected image signal and the teletext display signal and outputs the generated display signal to the display 16.

The display 16 displays a screen based on the inputted display signal. The display 16 selectively displays: an image based on the image signal included in the display signal; a text based on the teletext display signal, or a combination of the image and the text based on the image signal included in the display signal and the teletext display signal.

The non-image/VBI signal state detector 14 detects a non-image signal state which occurs at the time of the channel change by the tuner 12 when the input changer 13 is selecting and outputting the received image signal. When the non-image signal state is detected, the non-image/VBI signal state detector 14 outputs a data initialization signal to the teletext decoder 20. In the case where the non-image signal state is not detected, the non-image/VBI signal state detector 14 does not output the data initialization signal to the teletext decoder 20.

The teletext signal input processor 30 has the station name detector 21, the station name comparator 22, and the station name storing memory 23. The station name detector 21 detects data (hereinafter, called broadcast station name data) from the selected image signal for identifying the name of the broadcast station which transmitted the selected image signal, and outputs the detected data to the station name storing memory 23. The station name storing memory 23 stores therein the broadcast station name data detected by the station name detector 21. The station name storing memory 23 has a latest station name storing region 23a for storing the broadcast station name data superimposed on the latest selected image signal, and a previous station name storing region 23b for storing the broadcast station name data superimposed on the previous selected image signal. The station name comparator 22 reads the latest broadcast station name data and the previous broadcast station name data from the latest station name storing region 23a and the previous station name storing region 23b of the station name storing memory 23, respectively, and confirms whether the latest and previous broadcast station names identified by the two data are the same. The station name comparator 22, when determined that the broadcast station name identified by the latest broadcast station name data and the broadcast station name identified by the previous broadcast station name data are not the same, outputs the data initialization signal to the teletext decoder 20. The station name comparator 22, when determined that the two broadcast station names are the same, does not output the data initialization signal to the teletext decoder 20.

The teletext decoder 20 initializes the teletext display signal currently decoded in any of the following states:
- when the data initialization signal is received from the channel changer 17;
- when the data initialization signal is received from the non-image/VBI signal state detector 14; and
- when the data initialization signal is received from the station name comparator 22.

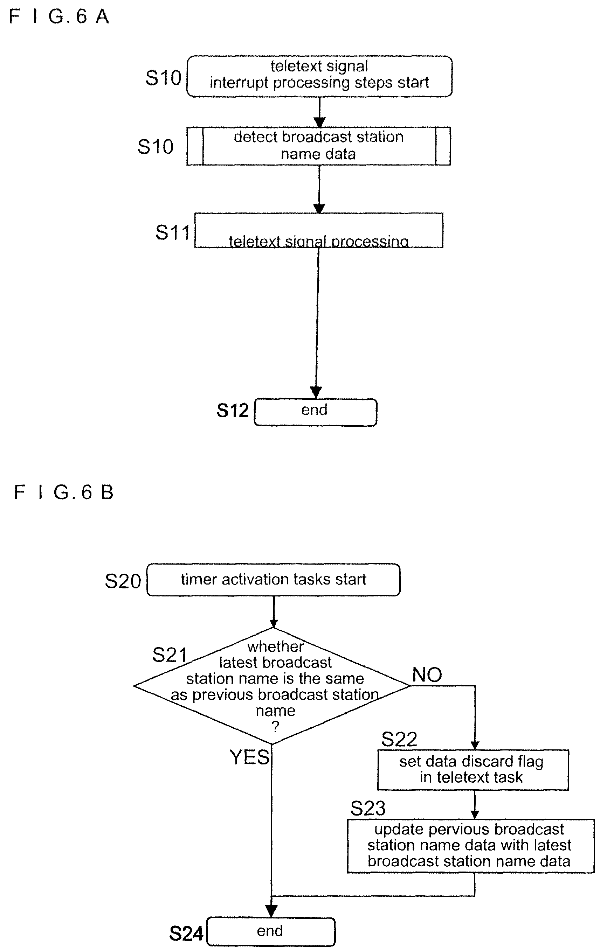

Referring to Figs. 6A - 6C, the operation of the teletext signal input processor 30 is described in detail below. The station name detector 21 is activated upon confirming that the teletext signal is included in the image signal. The operation of the station name detector 21 includes interrupt processing steps S10, S100, and S11 - S12 as illustrated in Fig. 6A. When the interrupt processing steps start (S10), the broadcast station name detection step S100 is first implemented to detect the broadcast station name data in the teletext signal. The broadcast station name data detected in the broadcast station name detection step S100 is stored in the latest station name storing region 23a of the station name storing memory 23 as the latest broadcast station name data. Then, the teletext signal analysis step S11, which is a main step, is implemented, and the interrupt processing steps end (S12).

The station name comparator 22 is activated in a given period of time after the teletext signal was detected in the image signal. The station name comparator 22 performs timer activation tasks S20 - S24 as illustrated by Fig. 6B. When the timer activation tasks start (S20), the station name comparator 22 reads the latest broadcast station name data and the previous broadcast station name data from the latest station name storing region 23a and the previous station name storing region 23b of the station name storing memory 23. The station name comparator 22 determines whether the broadcast station name identified by the read latest broadcast station name data (transmission source of the image signal) is the same as or different from the broadcast station name identified by the read previous broadcast station name data (transmission source of the image signal) (Step S21). In the case where the two broadcast station names are determined same in Step S21, the station name comparator 22 determines that there was no channel change in the selected image signal, and ends the timer activation tasks (S24). In the case where the two broadcast station names are determined to be different in Step S21, the station name comparator 22 determines that there was a channel change in the selected image signal, and sets a flag indicating that the data in the teletext decoder 20 (teletext display signal) should be discarded in a teletext task (S22),which will be described below, and then updates the previous broadcast station name data stored in the previous station name storing region 23b of the station name storing memory 23 with the latest broadcast station name data stored in the latest station name storing region 23a to prepare for the next channel change (S23). When Step 23 is completed, the station name comparator 22 ends the timer activation tasks (S24).

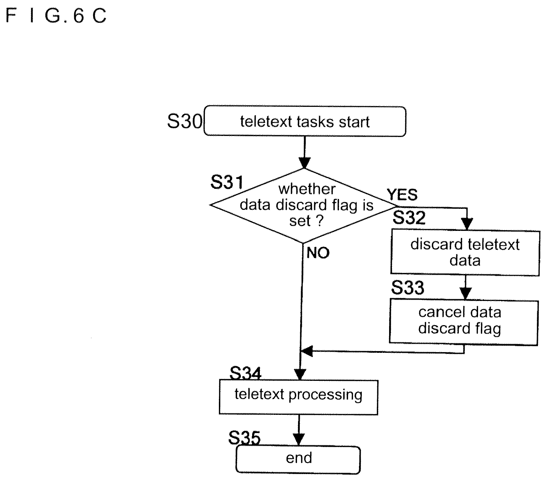

The teletext decoder 20 is activated at a predetermined interval. The teletext decoder 20 performs teletext tasks S30 - S35 as illustrated in Fig. 6C. When the teletext tasks start, the teletext decoder 20 confirms whether the flag indicating initialization (i.e., discard) of the data (i.e., teletext display signal) is set in the teletext task (Step S31). In the case where the presence of the flag is determined in Step S31, the task branches to Steps S32 - S33 which follow Step S31. The teletext decoder 20 initializes (i.e., discards) the data (i.e., teletext display signal) in Step S32, and clears the data discard flag in Step S33.

In the case where the presence of the flag is denied in Step S31 or the data discard flag is cleared in Step S32, the teletext decoder 20 implements normal teletext processing (S34), and then ends the teletext tasks S30 - S34 (S35).

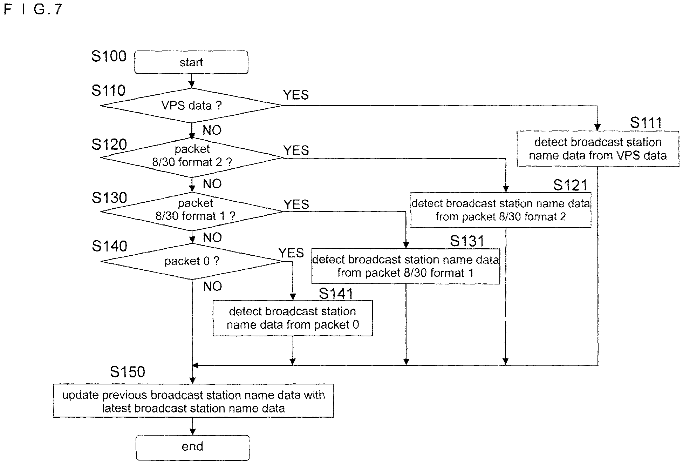

Referring to a flow chart as illustrated in Fig. 7, the broadcast station name detection step S100 by the station name detector 21 is described below in detail. When the broadcast station name detection step S100 starts, the teletext display signal is stored in the teletext decoder 20. In Step S110, the station name detector 21 determines whether the teletext signal detected in the image signal includes VPS (Video Program System) data. The VPS data is time information data (including the broadcast station name data) relating to the date and time when a broadcast program starts. Having determined in Step S110 that the teletext signal includes the VPS data, the station name detector 21 analyzes the VPS data and extracts the broadcast station name data (Step S111). The station name detector 21 stores the broadcast station name data extracted in Step S111 in the latest station name storing region 23a of the station name storing memory 23 (Step S150).

Having determined in Step S110 that the teletext signal detected in the image signal does not include the VPS (Video Program System) data, the station name detector 21 determines whether the teletext signal includes the packet 8/30 format 2 (Step S120). Having determined in Step S120 that the teletext signal includes the packet 8/30 format 2, the station name detector 21 analyzes the packet 8/30 format 2 and extracts the broadcast station name data (S121). The station name detector 21 stores the broadcast station name data extracted in Step S121 in the latest station name storing region 23a the station name storing memory 23 (Step S150).

Having determined in Step S120 that the teletext signal detected in the image signal does not include the packet 8/30 format 2, the station name detector 21 determines whether the teletext signal includes the packet 8/30 format 1 (Step S130). Having determined in Step S130 that the teletext signal includes the packet 8/30 format 1, the station name detector 21 analyzes the packet 8/30 format 1 and extracts the broadcast station name data (S131). The station name detector 21 stores the broadcast station name data extracted in Step S131 in the latest station name storing region 23a of the station name storing memory 23 (Step S150).

Having determined in Step S130 that the teletext signal detected in the image signal does not include the packet 8/30 format 1, the station name detector 21 determines whether the teletext signal includes the packet 0 (Step S140). Having determined in Step S140 that the teletext signal includes the packet 0, the station name detector 21 analyzes the packet 0 and extracts the broadcast station name data (S141). The station name detector 21 stores the broadcast station name data extracted in Step S141 in the latest station name storing region 23a of the station name storing memory 23 (Step S150).

Through these processing steps, the broadcast station name data (latest broadcast station name data) included in the image signal is extracted from the image signal and compared with the previous broadcast station name data at the predetermined interval. When the broadcast station name identified by the latest broadcast station name data and the broadcast station name identified by the previous broadcast station name data are different from each other, the teletext display signal in the teletext decoder 20 can be discarded.

According to the aforementioned description of the exemplary embodiment, the teletext display signal in the teletext decoder 20 is discarded based on the data initialization signal outputted from the station name comparator 22. Instead, the data initialization signal outputted from the channel changer 17 or the data initialization signal outputted from the non-image/VBI signal state detector 14 may be used to discard the teletext display signal in the teletext decoder 20.

In the aforementioned description of the exemplary embodiment, the apparatus 50 was described as the television image receiver. A video apparatus or a personal computer, however, may constitute the apparatus 50. In these modified examples of the apparatus 50, most of structural elements are basically the same as those of the illustration of Fig. 1 with the exception of the display 16 which is omitted.

### INDUSTRIAL APPLICABILITY

The present invention is advantageous for improvements of a teletext display.

### DESCRIPTION OF REFERENCE SYMBOLS

- 10: external image output equipment
- 11: wireless remote controller (external image output equipment)
- 12: tuner
- 13: input changer
- 14: non-image/VBI signal state detector
- 15: display device
- 16: display
- 17: channel changer
- 18: wireless remote controller (channel changer)
- 20: teletext decoder
- 21: station name detector
- 22: station name comparator
- 23: station name storing memory
- 23a: latest station name storing region
- 23b: previous station name storing region
- 30: teletext signal input processor
- 31: AV input terminal
- 40: teletext decoding device
- 50: apparatus (television image receiver)

## Claims

1. A teletext decoding device for detecting a teletext signal in an image signal to convert the detected teletext signal into a teletext display signal, the device comprising:
a station name detector for detecting, from the teletext signal, a broadcast station name of a broadcast station which transmits the image signal; and
a comparator for comparing a latest broadcast station name most recently detected from a current teletext signal with a previous broadcast station name previously detected from a previous teletext signal, and issuing an instruction to initialize the teletext display signal when it is determined from the comparison that the two broadcast station names are different from each other.

2. The teletext decoding device as claimed in Claim 1, further comprising a storage memory, wherein:
the storage memory has a latest station name storing region for storing therein the latest broadcast station name and a previous station name storing region for storing therein the previous broadcast station name, and
the comparator compares the latest broadcast station name read from the latest station name storing region with the previous broadcast station name data read from the previous station name storing region.

3. The teletext decoding device as claimed in Claim 2, wherein
when the comparator determines that the latest broadcast station name and the previous broadcast station name are different from each other, the comparator updates the previous broadcast station name stored in the previous station name storing region with the latest broadcast station name stored in the latest station name storing region.

4. An integrated circuit, comprising the teletext decoding device according to Claim 1, wherein the teletext decoding device is coupled to a RAM embedded in the integrated circuit or to an external RAM connected to the integrated circuit.

5. A television image receiver, comprising the teletext decoding device as claimed in Claim 1 embedded therein.

6. The television image receiver as claimed in Claim 5 further comprising:
a tuner for receiving a first image signal transmitted from the broadcast station;
an input terminal to which a second image signal is inputted from outside; and
an input changer for switchingly selecting one of the first image signal and the second image signal to supply the selected image signal as the image signal to the teletext decoding device.

7. A video apparatus, comprising the teletext decoding device as claimed in Claim 1 embedded therein.

8. A personal computer, comprising the teletext decoding device as claimed in Claim 1 embedded therein.

## Patentansprüche

1. Teletext-Decodierungseinrichtung zum Detektieren eines Teletextsignals in einem Bildsignal zum Umwandeln des detektierten Teletextsignals in ein Teletext-Anzeigesignal, wobei die Einrichtung umfasst:
Einen Stationsnamen-Detektor zum Detektieren, anhand des Teletextsignals, eines Rundfunkstationsnamens einer Rundfunkstation, die das Bildsignal sendet; und
einen Komparator zum Vergleichen wenigstens eines Rundfunkstationsnamens, der zuletzt anhand eines aktuellen Teletextsignals detektiert wurde, mit einem vorherigen Rundfunkstationsnamen, der vorher anhand eines vorherigen Teletextsignals detektiert wurde, und Ausgeben eines Befehls zum Initialisieren des Teletextanzeigesignals, wenn anhand des Vergleichs ermittelt wird, dass die zwei Rundfunkstationsnamen voneinander verschieden sind.

2. Teletext-Decodierungseinrichtung wie in Anspruch 1 beansprucht, die ferner einen Speicher umfasst, wobei:
der Speicher einen Speicherbereich für neueste Stationsnamen aufweist, um darin den neuesten Rundfunkstationsnamen zu speichern und einen Speicherbereich für vorherige Stationsnamen aufweist, um darin den vorherigen Stationsnamen zu speichern, und
der Komparator den neuesten Rundfunkstationsnamen, der aus dem Speicherbereich für neueste Stationsnamen ausgelesen wurde, mit den vorherigen Daten für Rundfunkstationsnamen vergleicht, die aus dem Speicherbereich für vorherige Stationsnamen ausgelesen wurde.

3. Teletext-Decodierungseinrichtung wie in Anspruch 2 beansprucht, wobei,
wenn der Komparator ermittelt, dass der neueste Rundfunkstationsname und der vorherige Rundfunkstationsname voneinander verschieden sind, der Komparator den im Speicherbereich für vorherige Rundfunktionsnamen gespeicherten vorherigen Rundfunkstationsnamen mit dem neuesten im Speicherbereich für neueste Stationsnamen gespeicherten Rundfunkstationsnamen aktualisiert.

4. Integrierte Schaltung, welche die Teletext-Decodierungseinrichtung nach Anspruch 1 umfasst, wobei die Teletext/Decodierungseinrichtung an einen in die integrierte Schaltung eingebetteten RAM-Speicher oder an einen mit der integrierten Schaltung verbundenen externen RAM-Speicher gekoppelt ist.

5. Fernsehbildempfänger, der die darin eingebettete Teletext-Decodierungseinrichtung, wie in Anspruch 1 beansprucht, umfasst.

6. Fernsehbildempfänger, wie in Anspruch 5 beansprucht, ferner umfassend:
einen Tuner zum Empfangen eines ersten von der Rundfunkstation gesendeten Bildsignals;
einen Eingabeanschluss in den ein zweites Bildsignal von außen eingegeben wird; und
Einen Eingabewechsler zum schaltbaren Selektieren eins des ersten Bildsignals und des zweiten Bildsignals, um das selektierte Bildsignal als das Bildsignal an die Teletext-Decodierungseinrichtung zu liefern.

7. Videogerät, das die darin eingebettete Teletext-Decodierungseinrichtung, wie in Anspruch 1 beansprucht, umfasst.

8. Personal Computer, der die darin eingebettete Teletext-Decodierungseinrichtung, wie in Anspruch 1 beansprucht, umfasst.

## Revendications

1. Dispositif de décodage de télétexte servant à détecter un signal de télétexte dans un signal d'image à des fins de conversion du signal de télétexte détecté en un signal d'affichage de télétexte, le dispositif comportant :
un détecteur de nom de station servant à détecter, en provenance du signal de télétexte, un nom de station de diffusion d'une station de diffusion qui transmet le signal d'image ; et
un comparateur servant à comparer un nom de station de diffusion le plus récent détecté récemment en provenance d'un signal de télétexte en cours par rapport à un nom de station de diffusion précédent détecté précédemment en provenance d'un signal de télétexte précédent, et servant à émettre une instruction à des fins d'initialisation du signal d'affichage de télétexte quand il est déterminé d'après la comparaison que les deux noms de station de diffusion sont différents l'un par rapport à l'autre.

2. Dispositif de décodage de télétexte selon la revendication 1, comportant par ailleurs une mémoire de stockage, dans lequel :
la mémoire de stockage a une région de stockage de nom de station le plus récent servant à stocker dans celle-ci le nom de station de diffusion le plus récent et une région de stockage de nom de station précédent servant à stocker dans celle-ci le nom de station de diffusion précédent, et
le comparateur compare le nom de station de diffusion le plus récent lu dans la région de stockage du nom de station le plus récent par rapport aux données de noms de station de diffusion précédents lues dans la région de stockage de nom de station précédent.

3. Dispositif de décodage de télétexte selon la revendication 2, dans lequel
quand le comparateur détermine que le nom de station de diffusion le plus récent et le nom de station de diffusion précédent sont différents l'un par rapport à l'autre, le comparateur effectue une mise à jour du nom de station de diffusion précédent stocké dans la région de stockage de nom de station précédents par le nom de station de diffusion le plus récent stocké dans la région de stockage du nom de station le plus récent.

4. Circuit intégré, comportant le dispositif de décodage de télétexte selon la revendication 1, dans lequel le dispositif de décodage de télétexte est couplé à une mémoire vive incorporée dans le circuit intégré ou à une mémoire vive externe connectée au circuit intégré.

5. Récepteur d'images de télévision, comportant le dispositif de décodage de télétexte selon la revendication 1, incorporé dans celui-ci.

6. Récepteur d'images de télévision selon la revendication 5, comportant par ailleurs :
un syntoniseur servant à recevoir un premier signal d'image transmis en provenance de la station de diffusion ;
un terminal d'entrée dans lequel un deuxième signal d'image est entré en provenance de l'extérieur ; et
un changeur d'entrée servant à sélectionner par commutation l'un parmi le premier signal d'image et le deuxième signal d'image afin de fournir le signal d'image sélectionné comme signal d'image au dispositif de décodage de télétexte.

7. Appareil vidéo, comportant le dispositif de décodage de télétexte selon la revendication 1, incorporé dans celui-ci.

8. Ordinateur personnel, comportant le dispositif de décodage de télétexte selon la revendication 1, incorporé dans celui-ci.
